# EUROPEAN PATENT SPECIFICATION

(11) **EP 2 760 696 B1**
(45) Date of publication and mention of the grant of the patent: **30.12.2020**
(21) Application number: 12774982.8
(22) Date of filing: 25.09.2012
(51) Int. Cl.: B60L 53/14, B60L 53/30, B60L 55/00, B60L 53/63, B60L 53/65, B60L 53/68, B60L 53/67

(54) **METHOD AND SYSTEM FOR CHARGING ELECTRIC VEHICLES**
VERFAHREN UND SYSTEM ZUM LADEN VON ELEKTROFAHRZEUGEN
SYSTÈME ET PROCÉDÉ DE CHARGE POUR DES VÉHICULES ÉLECTRIQUES

(30) Priority: 29.09.2011 EP 11007936
(43) Date of publication of application: 06.08.2014
(73) Proprietor: NEC Corporation, Tokyo 108-8001 (JP)
(72) Inventor: SCHUELKE, Anett, 69251 Gaiberg (DE); BODET, Cédric, 81825 München (DE); ERICKSON, Kellie, 69115 Heidelberg (DE); JABLONOWSKI, Rafal, 30324 Krakow (PL)
(74) Representative: Patent- und Rechtsanwälte Ullrich & Naumann
(86) International application number: PCT/EP2012/068880
(87) International publication number: WO 2013/045449

(56) References cited:
- WO-A1-94/08381
- WO-A1-94/08381
- US-A1- 2009 210 357
- US-A1- 2011 127 944
- US-A1- 2011 127 944
- US-B1- 6 941 197
- US-B1- 6 941 197

## Description

The present invention relates to a method for charging electric vehicles by charging stations according to the pre-characterizing portion of claim 1.

The invention also relates to a system for charging electric vehicles according to the pre-characterizing portion of claim 15.

Although in general applicable to any kind of charging, the present invention will be described with regard to fast charging of electric vehicles.

The need for alternatives to fuel-based transportations, will lead to a huge increase of the number of electric vehicles. Electric vehicles when powered by sustainable energy sources like solar or wind energy will provide sustainable green transportation. Electric vehicles usually carry a battery for storing and providing electric energy instead of a fuel tank as in conventional vehicles with internal combustion engine. The electric energy stored in the battery may be used by an electric motor for movement of the electric car. These batteries have to be charged similar to filling up a fuel tank of a car with combustion engine.

There exist two charging methods, which are distinguished by their power with which the batteries are charged: So called normal and fast charging. Normal charging with low power at stationary locations like at home, at work or in shopping malls lasts normally at least a few hours and therefore can be handled with flexibility. Normal charging processes can be controlled with conventional demand response methods: For example users are offered monetary incentives in order to motivate a power grid or a charging station friendly behavior.

However, fast charging processes are completely different: A fast charging process is a short-term process with immediate power demand and with a high power level, e. g. between 40 kW and 60 kW. The resulting impact on the underlying power grid is considered to be highly stochastic due to the highly dynamic process of electric vehicles moving in general independently of each other. The underlying power grid must provide instantly, i.e. on-demand corresponding high-power for fast charging. Such a fast charging process for an electric vehicle is considered to be an intermittent load to the underlying power grid.

Therefore power grid or charging station friendly behavior cannot be influenced reasonably in a similar way like in the case of normal charging e.g. by load shifting or throttling resulting in the disadvantage that such fast charging processes can only minimally be influenced when an electric vehicle is connected to a charging station.

In order to further provide more sustainable energy, solar or wind power related energy is fed into power grids. One of the disadvantages in such a case is, that the power grid gets more unstable with regard to energy supply. As a result it makes it even more difficult for drivers of electric cars to obtain flexible timing options for charging their electric vehicles.

US 2011/127944 A1 shows a local parking and power charging system. This local parking and power charging system comprises local parking spaces and local assignment means which assign - after a vehicle has arrived - a ranking of charging performance to each detected empty parking space so that the empty parking space having a charging device of a higher charging performance has a higher ranking of charging performance on the basis of descending order of charging performance of the charging devices. Each parking space is being equipped with a charging device having a different charging performance.

It is therefore an objective of the present invention to provide users an increased flexibility for charging their electric vehicles, in particular in the case of fast charging processes.

It is a further objective of the present invention to provide owners of charging stations with increased capacity utilization for their charging stations.

It is a further objective of the present invention to provide an operator of a power grid connected to charging stations also an enhanced flexibility with regard to the variability of the loads at the charging stations due to the fluctuating number of electric vehicles to be charged at the charging station.

It is an even further objective of the present invention to provide drivers of electric vehicles an enhanced charging comfort at a charging station.

The aforementioned objectives are accomplished by a method of claim 1 and a system of claim 15.

According to the invention it has been recognized that in particular due to the matching an adaptation of the loads, i.e. provided charging power profiles, at the charging stations to the available power generation profile of the power grid is enabled.

According to the invention it has further been recognized that peak demand of charging stations can be lowered. A need for additional costly energy generation, in particular by environmental unfriendly energy sources like gas turbines, etc. to compensate peak charging demands is avoided.

According to the invention it has further been recognized that enhanced capacity utilization with regard to different electric vehicle supply equipment of different charging stations and with regard to the maximum available power consumption is enabled.

According to the invention it has further been recognized that locally independent stationary deployed electric vehicle charging capacities for dynamically changeable mobile loads considered as groups of loads are dynamically used.

According to the invention it has even further been recognized that collaboration between electric vehicles, charging stations and an underlying power grid is enabled.

Further features, advantages and preferred embodiments are described in the following subclaims.

According to a preferred embodiment for the prediction a charging fleet of electric vehicles for one of the charging stations is defined and electric vehicles of the charging fleet are temporarily grouped into different charging groups for the one charging station wherein the grouping into the charging groups is based on technical parameters, preferably at least on charging information of the electric vehicles in the charging fleet and on charging power information of the one charging station, and at least one other charging station, preferably an adjacent charging station. The adjacent charging station may be in the direction of travel of the electric vehicles in the charging fleet. One advantage is that this reduces the calculation amount when predicting the matching. A further advantage is that single behaviour of drivers of electric vehicles can be channelled providing group goals allowing a simpler assignment of electric vehicles to different charging stations.

According to a further preferred embodiment at least one of the charging groups is assigned to the one charging station for charging the electric vehicles in this charging group. For example vehicles to be charged are assigned to the one charging station having critical state-of-charge (SOC) condition, wherein the vehicles in the other groups may be - if the charging station allows a further charging, for example the charging station has enough charging power for other electric vehicles - charged optionally defining another group with uncritical state of charge condition. The assignment of the at least one group to the charging station enables to optimize the sequence of electric vehicles at this charging station with reduced calculation effort; thus being more easily.

According to a further preferred embodiment at least one of the further charging groups is included into a charging fleet for the at least one other charging station, preferably the adjacent charging station. This enables in an even further optimized way to assign another group of electric vehicles which cannot or which may be optionally charged at the charging station to the next one on a combined travel route of the electric vehicles in this group, in case the nearest charging station cannot provide sufficient charging power and/or enough electric vehicle supply equipment for charging further electric vehicles of the at least one other group.

According to a further preferred embodiment the charging fleet for a charging station is defined according to a pre-given distance between an electric vehicle and a charging station, waiting time for an electric vehicle at the charging station and/or a user preference of a user of an electric vehicle. When defining the charging fleet for a charging station according to a pre-given distance or proximity all electric vehicles within the pre-given distance of the charging station are checked whether or not they may be charged by this charging station allowing a simple definition of charging fleets. When for example waiting time is used for defining a charging fleet for a charging station, all electric vehicles that are below a threshold for the waiting time, i.e. for example which have to wait less than five minutes, are to be charged by the charging station. Furthermore user preferences may be taken into account when defining the charging fleet. For example, if the charging depends on a dynamic prizing, a user preference may be that a certain prize for charging must not be exceeded. Therefore, the electric vehicle of this user would be - if the state of charge of the electric vehicle allows an assignment to another charging station - assigned to the other charging station which enables for example lower rates for charging.

According to a further preferred embodiment regrouping of electric vehicles in the charging groups is also performed according to a non-technical parameter, preferably priority information. This enhances further the flexibility, since not only technical but also non-technical parameters may be used for defining the charging fleet respectively the charging groups. It is also possible to first use the non-technical parameter for grouping and then use the technical parameter for regrouping.

According to a further preferred embodiment charging power information of the at least one other charging station, preferably an adjacent charging station, is forecasted, preferably by distance estimation, by a moving profile of the electric vehicle of the charging fleet and/or by predicted electric vehicle charging information. Forecasting enables enhancing group definition for a present charging station as well as for group definition assigned to another charging station. For example if an electric vehicle should be assigned to the group to be charged at the present charging station or to a group assigned to the other charging station the charging power information of the at least one other charging station is forecasted upon arrival of the electric car. Assuming for example, that a result of the forecast is, that the electric vehicle would then not be charged, because of other cars arriving prior to the electric vehicle and further assuming that the local charging station is able to provide enough charging power, then the electric vehicle is grouped and assigned to the local charging station for charging. This avoids that unnecessary waiting times at the next charging station or an overload of the next charging station occurs.

According to a further preferred embodiment charging power information, preferably load information of a prior adjacent and a next adjacent charging station with regard to the one charging station is used for grouping. This enhances further the flexibility as well as enables a further optimization with regard to utilization of different charging stations, since the prior as well as the next adjacent charging information are taken into account. For example, if electric cars arriving at the charging station wherein assigned by the prior charging station to this charging station, these cars may be regrouped: For example if the state-of-charge (SOC) has changed during transfer of the electric vehicle from the prior adjacent charging station to this charging station, regrouping is necessary to avoid a critical state-of-charge (SOC). Other cars with non-critical state-of-charge conditions may be further assigned to the next adjacent charging station if the charging information of these electric vehicles allows travelling from this charging station to the next adjacent charging station.

According to a further preferred embodiment electric vehicle charging information and/or charging power information between a charging station and an electric vehicle is exchanged via short-range communication, preferably within a certain distance between the electric vehicle and the charging station. Short range communication enables a simple as well as cost effective way to exchange charging information between the charging station and an arriving electric vehicle. When for example an electric vehicle comes within a certain distance to the charging station, the charging information may be transmitted from the electric vehicle to the charging station and the charging station may then proceed with a prediction of matching of the received charging information and its charging power information.

According to a further preferred embodiment charging station information, preferably load, fleet and/or charging power information, between two charging stations is exchanged via mobile communication, preferably via 3G or 4G network and/or via the internet. In this way charging stations together with electric vehicles far away from a certain charging station may communicate with each other enabling an even further optimization between the electric vehicles and different charging stations as well as providing an overall optimization between different charging stations.

According to a further preferred embodiment the prediction and/or the determination of the charging station parameter is performed locally at the charging station or by a global entity connected to at least one of the charging stations and preferably located in the internet. One of the advantages of a local performance of the prediction is enhanced flexibility: different charging stations may use different algorithms to determine the prediction of the matching of the determination of the charging station parameter. An advantage of the prediction and/or the determination by a global entity is, that the global entity then receives information of all charging stations connected to it. This enables for example to use this information on the one hand for optimizing the charging of electric vehicles by distributing them globally to the different charging stations according to their travel routes. A further advantage is that the global entity may draw conclusions about the corresponding underlying power grid or power grid section to which the charging stations are connected to: If charging power information of all charging stations is transmitted in particular regularly, the global entity obtains at different time points information about the condition of the power grid or power grid section. This information may be used to further optimize the power grid or power grid section to which the charging stations are connected to.

According to a further preferred embodiment power grid information of power grid sections to which the charging stations are connected to are determined and used for the prediction and/or the determination of the charging station parameter. One of the advantages is that actual conditions of the power grid to which the charging stations are connected to can be determined. The corresponding results can then be used in connection with charging information of the electric vehicles, for example a maximum number of electric vehicles is determined which can then be charged at the charging station. If the power grid conditions fluctuate this can be taken into account for example with respect to the different charging fleets, i.e. the number of electric vehicles in the group to be charged at the current charging station and the number of electric vehicles to be charged at another charging station.

According to a further preferred embodiment the charging station parameter represents maximum capacity utilization of a charging station and/or of an electric vehicle supply equipment and/or conditions of a power grid connected to the charging station. When the charging station parameter represents maximum capacity utilization a charging station operator is enabled to operate the charging station in an efficient way. If the charging station parameter represents conditions of a power grid connected to the charging station power grid conditions can be matched to charging information of electric vehicles, thereby providing an optimized use of the power grid at the time when charging the electric vehicles at the charging station.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained.

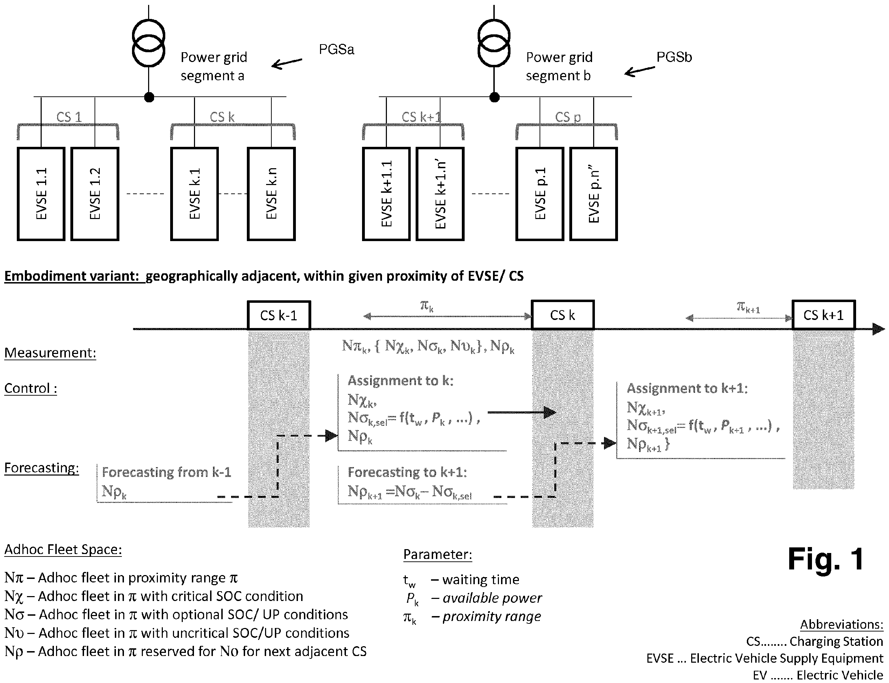

In the drawing
- Fig. 1: shows a schematic view of a system and a method according to an embodiment of the present invention.

In the upper half of Fig. 1 there are shown two different power grid segments PGSa and PGSb. To each power grid segment PGSa, PGSb respective charging stations CS1, ..., CSk, CSk+1, ..., CSp is connected. Each of the different charging stations CS1, ..., CSk and CSk+1, ..., CSp comprises electric vehicle supply equipment EVSE1.1, EVSE1.2, ..., EVSEk.1,..., EVSEk.n, and EVSEk+1.1, EVSEk+1.n', ..., EVSEp.1, ESVEp.n". In each power grid segment PGSa, PGSb the charging stations CS1, ..., CSk and CSk+1, ..., CSp are connected in parallel to the other charging stations CS1, ..., CSk, CSk+1, ..., CSp of the respective power grid segment PGSa, PGSb. The charging stations CS1, ..., CSp may also contain only one electric vehicle supply equipment which have each a single connection to the power grid segment PGSa, PGSb.

The charging stations CS1, ..., CSp - as described above - are distributed over various parts of the power grid segment PGSa, PGSb, i.e. that not every adjacent charging stations CS1, ..., CSp have the same power grid segment conditions. Power grid segment conditions are defined by the supply, the aggregation of all loads in the power grid segment PGSa, PGSb, the power of the transformer of the power grid segments PGSa, PGSb and the balancing between supply and loads in the power grid segment PGSa, PGSb.

In the lower half of Fig. 1 different charging stations CSk-1, CSk and CSk+1 are shown adjacent to a given travel route of electric vehicles. When considering an assignment of electric vehicles approaching the charging station CSk a collection of uncorrelated electric vehicles approaching this charging station CSk is defined as approaching fleet Nπₖ which is temporarily defined when the electric vehicles are within a specified predetermined distance, respectively proximity range πₖ.

Within this approaching fleet Nπₖ of the charging station CSk the electric vehicles are further grouped into three sub-fleets which define the assignment to the charging station CSk over time: The temporarily defined fleet Nπₖ is also called ad hoc fleet. The sub-fleets comprise a first ad hoc fleet Nχₖ within the specified proximity range πₖ of charging station CSk and comprising electric vehicles which have a critical state-of-charge SOC condition. A second ad hoc fleet within the specified proximity range πₖ, denoted with reference sign Nσₖ comprises electric vehicles having an optional state-of-charge SOC and/or user preferences conditions. The third sub-fleet defines an ad hoc fleet Nvₖ comprising all electric vehicles with uncritical state-of-charge SOC or user preferences condition. The grouping into the second ad hoc fleet Nσₖ, i.e. the electric vehicles with optional state-of-charge and/or user preferences condition(s) may be defined as a function of a waiting time for the electric cars at the charging station CSk, the available power Pk at the charging station CSk and/or further parameters, in particular user preferences.

When considering now the charging of electrical vehicles by the charging station CSk the electric vehicles within the specified proximity range πₖ and which belong to the first ad hoc fleet Nχₖ, i.e. the sub-fleet comprising the electric vehicles with critical state-of-charge SOC condition, will be mandatorily assigned to this charging station CSk. Otherwise due to the critical SOC condition, the electric vehicles would not have enough battery power left to reach the next charging station on their travel route. The other two groups, i.e. the second and third ad hoc sub-fleets Nσₖ, Nvₖ are analysed with respect to the next adjacent charging station CSk+1. Based on power grid segment conditions charging station capacity as well as the state-of-charge of the electric vehicles belonging to the sub-fleets Nσₖ, Nvₖ are sorted or grouped into a further ad hoc fleet Nρₖ₊₁ within the proximity range πₖ₊₁ defining electric vehicles assigned for potential charging at the next adjacent charging station CSk+1. Depending on the power grid segment conditions and/or the capacity usage of the charging station CSk as well as on pre-assigned electric vehicles Nρₖ₋₁obtained from the previous charging station CSk-1, some of the electric vehicles in the ad hoc sub-fleet Nσₖ, comprising the electric vehicles with optional state-of-charge SOC and/or user preferences condition can optionally be shifted to the ad hoc sub-fleet Nχₖ comprising the electric vehicles with critical state-of-charge SOC condition if necessary. Depending on the traffic density for electric vehicles between two adjacent charging stations CSk-1, CSk; CSk, CSk+1 the distance between the charging stations CSk-1, CSk; CSk, CSk+1, power grid segment conditions and capacity usages, a local grouping or assignment to the different ad hoc fleets and sub fleets with respect to the regional distribution of loads of the different charging stations constrains may be applied for charging stations CSk-1, CSk; CSk, CSk+1 in different regions. The result is a local expectation or forecast for the charging loads on the charging stations CSk-1, CSk and CSk+1.

In detail electric vehicles of an ad hoc fleet Nρₖ are forecasted from the charging station CSk-1 for charging at a charging station CSk. This ad hoc fleet Nρₖ is then subjected to the grouping process: Three sub-fleets at the charging station CSk are formed together with further electric vehicles directly arriving at the charging station CSk. The assignment to the charging station CSk is performed as mentioned above. Further at the charging station CSk a forecasting is performed for electric vehicles to be charged at the next charging station CSk+1. This ad hoc fleet for the next charging station CSk+1 is denoted with reference sign Npk+1 and comprises the electric vehicles included in the ad hoc sub fleet Nσₖ except the selected electric vehicles which have optional state of charge SOC and/or user preferences condition but already assigned for charging at the charging station CSk.

In summary the present invention provides an optimal assignment of electric vehicles to the charging capacities of charging stations and/or electric vehicles supply equipment along a driving path or route of an electric vehicle. The present invention provides a local (i.e. power grid segment-wise, geographically adjacent and within a given proximity of electric vehicle supply equipment or charging station) optional matching of the charging needs of an approaching fleet with the charging conditions.

The present invention further provides a wide-range optimization of electric vehicles to be charged on their travel route. Further the present invention enables a maximum capacity utilization of each electric vehicle supply equipment optimized over time while at the same time respecting power grid conditions taking into account generation and/or storage capacities, time, physical capacities, dynamic prizing and/or spot prizing. The present invention further provides a dynamic duration of a temporary ad hoc fleet within a given proximity range of a specific charging station.

The present invention enables an estimation of different fleet groups defined through the parameter space of state-of-charge SOC, waiting time t_{w} and user preferences enabling collaboration between the charging stations for assigning different fleets and/or groups to different charging stations. Furthermore the present invention enables a forecast of future charging needs including the next adjacent charging stations, the entire power grid segment and the entire path consideration, i.e. car driving range, travelling route or the like.

The present invention further provides
1) Dynamic utilization of locally independently stationary deployed electric vehicle charging capacities for changeable, mobile loads (electric vehicles and group of loads (fleet, groups);
2) Communication system and control logic adapted for assignment method based on
   I) locally optimized utilization (Temporary ad hoc fleet with different parameter space considerations),
   II) locally optimized utilization with neighborhood collaboration (adjacent station, power grid segment, highway segments),
   III) global pre-assignment with respect to average range estimation over entire system (travel route);
3) Communication system and control logic adapted for assignment method based on ad hoc fleet optimization with respect to electric vehicle characteristics (SOC, SOH) and user preferences (anxiety level of SOC, waiting time, travel speed, ..) for an uncorrelated fleet;
4) Communication system and control logic adapted for assignment method based on ad hoc fleet optimization with respect to electric vehicle characteristics (SOC, SOH) and User preferences (anxiety level of SOC, waiting time, travel speed, ..) for a correlated fleet (example: logistics companies with special tariff contracts).

One of the advantages of the present invention is that power grid dynamics are linked to load management for charging stations which may be based on the dynamics of the power grid supply chain and allowing a more intelligent traffic control for electric vehicles.

## Claims

1. A method for assigning electric vehicles to charging stations (CS1, ..., CSk, CSk+1, ..., CSp), by means of a communication system and control logic which is in communication with the electric vehicles and the charging stations, comprising the steps of
a) Assigning electric vehicles to different electric vehicle supply equipment (EVSE1.1, EVSE1.2, ..., EVSEk.1, EVSEk.n, EVSEk+1.1, EVSE k+1.n', ..., EVSEp.1, EVSEp.n") of the charging stations (CS1, ..., CSk, CSk+1, ..., CSp), prior to arrival at the charging stations, wherein at least two charging stations are connected to different power grid segments (PSGa, PSGb),
**characterized in that**
said assignment results from a predicted matching of electric vehicle charging information, being at least a State-of-Charge, (SOC) of said electric vehicles and
charging power information, being at least the parameter of a provided charging power, of said different charging stations (CS1, ..., CSk, CSk+1, ..., CSp) wherein said matching is based on said electric vehicle information and said charging station parameter.

2. The method according to claim 1, **characterized in that** for the prediction a charging fleet (Npₖ) of electric vehicles for one of charging stations (CSk) is defined and that electric vehicles of the charging fleet (Npₖ) are temporarily grouped into different charging groups (Ncₖ, Nsₖ, Npₖ) for the one charging station (CSk), wherein the grouping into the charging groups (Ncₖ, Nsₖ, Npₖ) is based on technical parameters, preferably at least on charging information of the electric vehicles in the charging fleet (Npₖ) and on charging power information of the one charging station (CSk) and at least one other charging station (CSk-1, Csk+1), preferably an adjacent charging station.

3. The method according to claim 2, **characterized in that** at least one of the charging groups (Ncₖ, Nsₖ, Npₖ) is assigned to the one charging station (CSk) for charging the electric vehicles in this charging group (Ncₖ, Nsₖ, Npₖ).

4. The method according to claim 3, **characterized in that** at least one of the further charging groups (Ncₖ, Nsₖ, Npₖ) is included into a charging fleet (Npₖ₊₁) for the at least one other charging station (CSk+1), preferably the adjacent charging station.

5. The method according to one of the claims 2-4, **characterized in that** the charging fleet (Npₖ) for a charging station (CSk) is defined according to a pregiven distance (pₖ) between an electric vehicle and the charging station (CSk), waiting time (t_{w}) for an electric vehicle at the charging station (CSk) and/or on user preferences of a user of an electric vehicle.

6. The method according to one of the claims 2-5, **characterized in that** regrouping of electric vehicles in the charging groups (Ncₖ, Nsₖ, Npₖ) is performed according to a non-technical parameter, preferably priority information.

7. The method according to one of the claims 2-6, **characterized in that** charging power information of the at least one other charging station (CSk-1, CSk+1), preferably an adjacent charging station (CSk-1, CSk+1), is forecasted, preferably by distance estimation, by a moving profile of electric vehicles of the charging fleet (Npₖ) and/or by predicted electric vehicle charging information.

8. The method according to one of the claims 2-7, **characterized in that** charging power information, preferably load information, of a prior adjacent and next adjacent charging station (CSk-1, CSk+1) with regard to the one charging station (CSk) is used for the grouping.

9. The method according to one of the claims 1-8, **characterized in that** electric vehicle charging information and/or charging power information between a charging station (CSk) and an electric vehicle is exchanged via short-range-communication, preferably within a certain distance between electric vehicle and charging station (CSk).

10. The method according to one of the claims 1-9, **characterized in that** charging station information, preferably load, fleet and/or charging power information, between two charging stations (CSk-1, CSk; CSk, CSk+1) is exchanged via a mobile communication, preferably via 3G or 4G network and/or via the internet.

11. The method according to one of the claims 1-10, **characterized in that** the prediction and/or the determination of the charging station parameter is performed locally at a charging station (CSk-1, CSk, CSk+1) or by a global entity, connected to at least one of the charging stations (CSk-1, CSk, CSk+1) and preferably located in the internet.

12. The method according to one of the claims 1-11, **characterized in that** power grid information of power grid sections (PGSa, PGSb) to which the charging stations (CSk-1, CSk, CSk+1) are connected to are determined and used for the prediction and/or the determination of the charging station parameter.

13. The method according to one of the claims 1-12, **characterized in that** the charging station parameter represents maximal capacity utilization of a charging station (CS1, ..., CSk, CSk+1, ..., CSp) and/or of an electric vehicle supply equipment (EVSE1.1, EVSE1.2, ..., EVSEk.1, EVSEk.n, EVSEk+1.1, EVSE k+1.n', ..., EVSEp.1, EVSEp.n"), and/or conditions of a power grid connected to the charging station (CS1, ..., CSk, CSk+1, ..., CSp).

14. The method according to one of the claims 1-13, **characterized in that** after assigning according to step a) the electric vehicles are charged according to electric vehicle charging information and provided charging power by the electric vehicle supply equipment (EVSE1.1, EVSE1.2, ..., EVSEk.1, EVSEk.n, EVSEk+1.1, EVSE k+1.n', ..., EVSEp.1, EVSEp.n") of the charging stations (CS1, ..., CSk, CSk+1, ..., CSp).

15. A system for assigning electric vehicles, to charging stations (CS1, ..., CSk, CSk+1, ..., CSp),
the system comprising a communication system and control logic which is in communication with the electric vehicles and the charging stations wherein each charging station comprises at least one electric vehicle supply equipment (EVSE1.1, EVSE1.2, ..., EVSEk.1, EVSEk.n, EVSEk+1.1, EVSEk+1.n', ..., EVSEp.1, EVSEp.n") for charging an electric vehicle according to electric vehicle charging information and
wherein at least two charging stations are connected to different power grid segments, for performing with a method according to one of the claims 1-14,
said system comprising
assigning means configured to be operable to assign electric vehicles to different electric vehicle supply equipment (EVSE1.1, EVSE1.2, ..., EVSEk.1, EVSEk.n, EVSEk+1.1, EVSE k+1.n', ..., EVSEp.1, EVSEp.n") of charging stations (CS1, ..., CSk, CSk+1, ..., CSp), prior to arrival at the charging stations,
**characterized by**
a prediction means configured to be operable to perform a predicted matching of electric vehicle charging information, being at least a State-of-Charge, (SOC) of said electric vehicles and charging power information, being at least provided charging power, of said different charging stations (CS1, ..., CSk, CSk+1, ..., CSp), based on said electric vehicle charging information and said charging station parameter, and by said assigning means configured to be operable to use the prediction for assigning the electric vehicles to different electric vehicle supply equipment (EVSE1.1, EVSE1.2, ..., EVSEk.1, EVSEk.n, EVSEk+1.1, EVSE k+1.n', ..., EVSEp.1, EVSEp.n") of the charging stations (CS1, ..., CSk, CSk+1, ..., CSp).

## Patentansprüche

1. Verfahren zum Zuweisen elektrischer Fahrzeuge zu Ladestationen (CS1, ..., CSk, CSk+1, ..., CSp) mit Hilfe eines Kommunikationssystems und einer Steuerlogik, die in Kommunikation mit den elektrischen Fahrzeugen und den Ladestationen steht, umfassend die Schritte
a) Zuweisen elektrischer Fahrzeuge zu verschiedenen Unterstützungseinrichtungen für elektrische Fahrzeuge (EVSE1.1, EVSE1.2, ..., EVSEk.1, EVSEk.n, EVSE k+1.n', ..., EVSEp.1, EVSEp.n") von den Ladestationen (CS1, ..., CSk, CSk+1, ..., CSp) vor einer Ankunft bei den Ladestationen, wobei zumindest zwei Ladestationen mit unterschiedlichen Energieversorgungsnetzsegmenten (PSGa, PSGb) verbunden sind,
**dadurch gekennzeichnet, dass**
die Zuweisung aus einem vorgesagten Übereinstimmen von Ladeinformationen elektrischer Fahrzeuge zumindest umfassend einen Ladezustand (SOC) von den elektrischen Fahrzeugen und Ladeleistungsinformationen umfassend zumindest den Parameter einer bereitgestellten Ladeleistung von den unterschiedlichen Ladestationen (CS1, ..., CSk, CSk+1, ..., CSp), resultiert, wobei das Übereinstimmen auf den Elektrische-Fahrzeug-Informationen und dem Ladestationsparameter basiert.

2. Verfahren gemäß Anspruch 1, **dadurch gekennzeichnet, dass** für die Vorhersage eine Ladeflotte (Npₖ) von elektrischen Fahrzeugen für eine der Ladestationen (CSk) definiert wird und dass elektrische Fahrzeuge der Ladeflotte (Npₖ) zeitweise in verschiedene Ladegruppen (Ncₖ, Nsₖ, Npₖ) für die eine Ladestation (CSk) gruppiert werden, wobei das Gruppieren in die Ladegruppen (Ncₖ, Nsₖ, Npₖ) auf technischen Parametern basiert, vorzugsweise zumindest auf Ladeinformationen der elektrischen Fahrzeuge in der Ladeflotte (Npₖ) und auf den Ladeleistungsinformationen der einen Ladestation (CSk) und zumindest einer weiteren Ladestation (CSk-1, CSk+1), vorzugsweise einer benachbarten Ladestation.

3. Verfahren gemäß Anspruch 2, **dadurch gekennzeichnet, dass** zumindest eine der Ladegruppen (Ncₖ, Nsₖ, Npₖ) der einen Ladestation (CSk) zugewiesen wird zum Laden der elektrischen Fahrzeuge in dieser Ladegruppe (Ncₖ, Nsₖ, Npₖ).

4. Verfahren gemäß Anspruch 3, **dadurch gekennzeichnet, dass** zumindest eine der weiteren Ladegruppen (Ncₖ, Nsₖ, Npₖ) in eine Ladeflotte (Npₖ₊₁) für die zumindest eine weitere Ladestation (CSk+1) integriert wird, vorzugsweise die benachbarte Ladestation.

5. Verfahren gemäß einem der Ansprüche 2-4, **dadurch gekennzeichnet, dass** die Ladeflotte (Npₖ) für eine Ladestation (CSk) definiert wird gemäß einer vorgegebenen Distanz (pₖ) zwischen einem elektrischen Fahrzeug und der Ladestation (CSk), einer Wartezeit (t_{w}) für ein elektrisches Fahrzeug an der Ladestation (CSk) und/oder Nutzerwünschen eines Nutzers eines elektrischen Fahrzeugs.

6. Verfahren gemäß einem der Ansprüche 2-5, **dadurch gekennzeichnet, dass** ein Umgruppieren von elektrischen Fahrzeugen in den Ladegruppen (Ncₖ, Nsₖ, Npₖ) durchgeführt wird anhand eines nicht-technischen Parameters, vorzugsweise anhand von Prioritätsinformationen.

7. Verfahren gemäß einem der Ansprüche 2-6, **dadurch gekennzeichnet, dass** Ladeleistungsinformationen der zumindest einen weiteren Ladestation (CSk-1, CSk+1), vorzugsweise der benachbarten Ladestation (CSk-1, CSk+1), vorausgesagt werden, vorzugsweise durch Entfernungsschätzung, durch ein Bewegungsprofil von elektrischen Fahrzeugen der Ladeflotte (Npₖ) und/oder durch vorgesagte Ladeinformationen elektrischer Fahrzeuge.

8. Verfahren gemäß einem der Ansprüche 2-7, **dadurch gekennzeichnet, dass** Ladeleistungsinformationen, vorzugsweise Lastinformationen, einer früheren benachbarten und späteren benachbarten Ladestation (CSk-1, CSk+1) bezogen auf die eine Ladestation (CSk) für das Gruppieren benutzt werden.

9. Verfahren gemäß einem der Ansprüche 1-8, **dadurch gekennzeichnet, dass** Ladeinformationen elektrischer Fahrzeuge und/oder Ladeleistungsinformationen zwischen einer Ladestation (CSk) und einem elektrischen Fahrzeug ausgetauscht werden über Kurzreichweitenkommunikation, vorzugsweise innerhalb einer bestimmten Entfernung zwischen elektrischem Fahrzeug und Ladestation (CSk).

10. Verfahren gemäß einem der Ansprüche 1-9, **dadurch gekennzeichnet, dass** Ladestationsinformationen, vorzugsweise Last, Flotten- und/oder Ladeleistungsinformationen, zwischen zwei Ladestationen (CSk-1, CSk; CSk, CSk+1) über mobile Kommunikation ausgetauscht werden, vorzugsweise mittels eines 3G oder 4G Netzwerks und/oder mittels des Internets.

11. Verfahren gemäß einem der Ansprüche 1-10, **dadurch gekennzeichnet, dass** die Vorhersage und/oder die Ermittlung des Ladestationsparameters lokal an der Ladestation (CSk-1, CSk, CSk+1) oder durch eine globale Entität durchgeführt wird, die mit zumindest einer der Ladestationen (CSk-1, CSk, CSk+1) verbunden ist und vorzugsweise im Internet angeordnet ist.

12. Verfahren gemäß einem der Ansprüche 1-11, **dadurch gekennzeichnet, dass** die Energieversorgungsnetzinformationen der Energieversorgungsnetzsegmente (PGSa, PGSb), mit denen die Ladestationen (CSk-1, CSk, CSk+1) verbunden sind, ermittelt und benutzt werden zur Vorhersage und/oder zur Bestimmung der Ladestationsparameter.

13. Verfahren gemäß einem der Ansprüche 1-12, **dadurch gekennzeichnet, dass** die Ladestationsparameter die maximale Fähigkeit der Nutzung einer Ladestation (CS1, ..., CSk, CSk+1, ..., CSp) und/oder einer Unterstützungseinrichtung für elektrische Fahrzeuge (EVSE1.1, EVSE1.2, ..., EVSEk.1, EVSEk.1, EVSEk.n, EVSEk+1.1, EVSEk+1.n', ..., EVSEp.1, EVSEp.n") und/oder Zustände eines Energieversorgungsnetzes, das mit der Ladestation (CS1, ..., CSk, CSk+1, ..., CSp) verbunden ist, repräsentieren.

14. Verfahren gemäß einem der Ansprüche 1-13, **dadurch gekennzeichnet, dass** nach dem Zuweisen gemäß Schritt a) die elektrischen Fahrzeuge gemäß den Ladeinformationen der elektrischen Fahrzeuge und der bereitgestellten Ladeleistung durch die Unterstützungseinrichtungen für elektrische Fahrzeuge (ESVE1.1, ESVE1.2, ..., EVSEk.1, EVSEk.n, EVSEk.n, EVSEk+1.1, EVSE k+1.n', ..., EVSEp.n") der Ladestationen (CS1, ..., CSk, CSk+1, ..., CSp) geladen werden.

15. System zum Zuweisen elektrischer Fahrzeuge zu Ladestationen (CS1, ..., CSk, CSk+1, ..., CSp),
wobei das System ein Kommunikationssystem und eine Steuerlogik umfasst, die in Kommunikation mit den elektrischen Fahrzeugen und den Ladestationen steht, wobei jede Ladestation zumindest eine Unterstützungseinrichtung für elektrische Fahrzeuge (EVSE1.1, EVSE1.2., ..., EVSEk.1, EVSEk.n, EVSEk+1.1, EVSEk+1.n', ..., EVSEp.1, EVSEp.n") zum Laden eines elektrischen Fahrzeugs gemäß Ladeinformationen für elektrische Fahrzeuge umfasst und
wobei zumindest zwei Ladestationen mit unterschiedlichen Energieversorgungsnetzsegmenten verbunden sind zum Durchführen eines Verfahrens gemäß einer der Ansprüche 1-14,
und wobei das System umfasst
Zuweisungsmittel ausgebildet zum Zuweisen elektrischer Fahrzeuge zu verschiedenen Unterstützungseinrichtungen für elektrische Fahrzeuge (EVSE1.1, EVSE1.2, ..., EVSEk.1, EVSEk.n, EVSEk+1.1, EVSEk+1.n', ..., EVSEp.1, EVSEp.n") von Ladestationen (CS1, ..., CSk, CSk+1, ..., CSp) vor einer Ankunft bei den Ladestationen,
**gekennzeichnet durch**
Vorhersagemittel ausgebildet zum Durchführen eines vorgesagten Übereinstimmens von Ladeinformationen elektrischer Fahrzeuge zumindest umfassend einen Ladezustand (SOC) von den elektrischen Fahrzeugen und Ladeleistungsinformationen umfassend zumindest bereitgestellte Ladeleistung von den unterschiedlichen Ladestationen (CS1, ..., CSk, CSk+1, ..., CSp) basierend auf den Ladeinformationen der elektrischen Fahrzeuge und dem Ladestationsparameter und durch die Zuweisungsmittel, die ausgebildet sind, die Vorhersage zum Zuweisen der elektrischen Fahrzeuge zu unterschiedlichen Unterstützungseinrichtungen für elektrische Fahrzeuge (EVSE1.1, EVSE1.2, ..., EVSEk.1, EVSEk.n, EVSEk+1.1, EVSEk+1.n', ..., EVSEp.1, EVSEp.n") der Ladestationen (CS1, ..., CSk, CSk+1, ..., CSp) zu nutzen.

## Revendications

1. Procédé pour affecter des véhicules électriques à des stations de charge (CS1, ..., CSk, CSk+1, ..., CSp), au moyen d'un système de communication et d'une logique de commande qui est en communication avec les véhicules électriques et les stations de charge, comprenant les étapes de
a) affectation de véhicules électriques à un équipement différent d'alimentation de véhicules électriques (EVSE1.1, EVSE1.2, ..., EVSEk.1, EVSEk.n, EVSEk+1.1, EVSE k+1.n', ..., EVSEp.1, EVSEp.n") des stations de charge (CS1, ..., CSk, CSk+1, ..., CSp), avant l'arrivée aux stations de charge, dans lequel au moins deux stations de charge sont connectées à différents segments de réseau électrique (PSGa, PSGb),
**caractérisé en ce que**
ladite affectation résulte d'une concordance prédite d'informations de charge de véhicules électriques, étant au moins un État-de-Charge (SOC) desdits véhicules électriques et d'informations de puissance de charge, étant au moins le paramètre d'une puissance de charge fournie, desdites différentes stations de charge (CS1, ..., CSk, CSk+1, ..., CSp) dans lequel ladite concordance est basée sur lesdites informations de véhicules électriques et ledit paramètre de station de charge.

2. Procédé selon la revendication 1, **caractérisé en ce que** pour la prédiction, une flotte de charge (Npₖ) de véhicules électriques pour l'une des stations de charge (CSₖ) est définie et **en ce que** des véhicules électriques de la flotte de charge (Npₖ) sont temporairement groupés en différents groupes de charge (Ncₖ, Nsₖ, Npₖ) pour la une station de charge (CSk), dans lequel le groupement dans les groupes de charge (Ncₖ, Nsₖ, Npₖ) est basé sur des paramètres techniques, de préférence au moins sur des informations de charge de véhicules électriques dans la flotte de charge (Npₖ) et sur des informations de puissance de charge de la une station de charge (CSk) et au moins une autre station de charge (CSk-1, Csk+1), de préférence une station de charge adjacente.

3. Procédé selon la revendication 2, **caractérisé en ce qu'**au moins un des groupes de charge (Ncₖ, Nsₖ, Npₖ) est affecté à la une station de charge (CSk) pour charger les véhicules électriques dans ce groupe de charge (Ncₖ, Nsₖ, Npₖ).

4. Procédé selon la revendication 3, **caractérisé en ce qu'**au moins un des autres groupes de charge (Ncₖ, Nsₖ, Npₖ) est compris dans une flotte de charge (Npₖ₊₁) pour l'au moins une autre station de charge (CSk+1), de préférence la station de charge adjacente.

5. Procédé selon l'une des revendications 2 à 4, **caractérisé en ce que** la flotte de charge (Npₖ) pour une station de charge (CSk) est définie selon une distance prédéfinie (pₖ) entre un véhicule électrique et la station de charge (CSk), un temps d'attente (t_{w}) d'un véhicule électrique à la station de charge (CSk) et/ou des préférences utilisateur d'un utilisateur d'un véhicule électrique.

6. Procédé selon l'une des revendications 2 à 5, **caractérisé en ce que** le regroupement de véhicules électriques dans les groupes de charge (Ncₖ, Nsₖ, Npₖ) est réalisé selon un paramètre non technique, de préférence, des informations de priorité.

7. Procédé selon l'une des revendications 2 à 6, **caractérisé en ce que** les informations de puissance de charge de l'au moins une autre station de charge (CSk-1, CSk+1), de préférence une station de charge adjacente (CSk-1, CSk+1), sont prévues, de préférence par une estimation à distance, par un profil de déplacement des véhicules électriques de la flotte de charge (Npₖ) et/ou par des informations de charge prédites de véhicules électriques.

8. Procédé selon l'une des revendications 2 à 7, **caractérisé en ce que** les informations de puissance de charge, de préférence, des informations de chargement, d'une station de charge adjacente précédente et adjacente suivante (CSk-1, CSk+1) par rapport à la une station de charge (CSₖ) sont utilisées pour le groupement.

9. Procédé selon l'une des revendications 1 à 8, **caractérisé en ce que** des informations de charge de véhicules électriques et/ou des informations de puissance de charge entre une station de charge (CSk) et un véhicule électrique sont échangées au moyen d'une communication à faible portée, de préférence, à une certaine distance entre un véhicule électrique et une station de charge (CSk).

10. Procédé selon l'une des revendications 1 à 9, **caractérisé en ce que** des informations de station de charge, de préférence de chargement, de flotte et/ou des informations de puissance de charge, entre deux stations de charge (CSk-1, CSk ; CSk, CSk+1) sont échangées au moyen d'une communication mobile, de préférence, par l'intermédiaire d'un réseau 3G ou 4G et/ou par Internet.

11. Procédé selon l'une des revendications 1 à 10, **caractérisé en ce que** la prédiction et/ou la détermination du paramètre de station de charge est réalisée localement à une station de charge (CSk-1, CSk, CSk+1) ou par une entité globale, connectée à au moins l'une des stations de charge (CSk-1, CSk, CSk+1) et se trouvant, de préférence, sur Internet.

12. Procédé selon l'une des revendications 1 à 11, **caractérisé en ce que** les informations de réseau électrique de sections de réseau électrique (PGSa, PGSb) auxquelles sont connectées les stations de charge (CSk-1, CSk, CSk+1) sont déterminées et utilisées pour la prédiction et/ou la détermination du paramètre de station de charge.

13. Procédé selon l'une des revendications 1 à 12, **caractérisé en ce que** le paramètre de station de charge représente une utilisation de capacité maximale d'une station de charge (CS1, ..., CSk, CSk+1, ..., CSp) et/ou d'un équipement d'alimentation de véhicules électriques (EVSE1.1, EVSE1.2, ..., EVSEk.1, EVSEk.n, EVSEk+1.1, EVSE k+1.n', ..., EVSEp.1, EVSEp.n"), et/ou des conditions d'un réseau électrique connecté à la station de charge (CS1, ..., CSk, CSk+1, ..., CSₚ).

14. Procédé selon l'une des revendications 1 à 13, **caractérisé en ce qu'**après l'affectation selon l'étape a) les véhicules électriques sont chargés selon des informations de charge de véhicules électriques et la puissance de charge fournie par l'équipement d'alimentation de véhicules électriques (EVSE1.1, EVSE1.2, ..., EVSEk.1, EVSEk.n, EVSEk+1.1, EVSE k+1.n', ..., EVSEp. 1, EVSEp.n") des stations de charge (CS1, ..., CSk, CSk+1, ..., CSₚ).

15. Système pour affecter des véhicules électriques à des stations de charge (CS1, ..., CSk, CSk+1, ..., CSp), le système comprenant un système de communication et une logique de commande qui est en communication avec les véhicules électriques et les stations de charge,
dans lequel chaque station de charge comprend au moins un équipement d'alimentation de véhicules électriques (EVSE1.1, EVSE1.2, ..., EVSEk.1, EVSEk.n, EVSEk+1.1, EVSE k+1.n', ..., EVSEp. 1, EVSEp.n") pour charger un véhicule électrique selon des informations de charge de véhicules électriques et
dans lequel au moins deux stations de charge sont connectées à différents segments de réseau électrique, pour un fonctionnement avec un procédé selon l'une des revendications 1 à 14,
ledit système comprenant des moyens d'affectation configurés pour être opérationnels afin d'affecter des véhicules électriques à un équipement différent d'alimentation de véhicules électriques (EVSE1.1, EVSE1.2, ..., EVSEk.1, EVSEk.n, EVSEk+1.1, EVSE k+1.n', ..., EVSEp. 1, EVSEp.n") de stations de charge (CS1, ..., CSk, CSk+1, ..., CSp), avant l'arrivée aux stations de charge,
**caractérisé par**
un moyen de prédiction configuré pour être opérationnel afin de réaliser une concordance prédite des informations de charge de véhicules électriques, étant au moins un État-de-Charge (SOC) desdits véhicules électriques et des informations de puissance de charge, étant au moins une puissance de charge fournie, desdites différentes stations de charge (CS1, ..., CSk, CSk+1, ..., CSp), sur la base desdites informations de charge de véhicules électriques et dudit paramètre de station de charge, et par lesdits moyens d'affectation configurés pour être opérationnels afin d'utiliser la prédiction pour affecter les véhicules électriques à un équipement différent d'alimentation de véhicules électriques (EVSE1.1, EVSE1.2, ..., EVSEk.1, EVSEk.n, EVSEk+1.1, EVSE k+1.n', ..., EVSEp. 1, EVSEp.n") des stations de charge (CS1, ..., CSk, CSk+1, ..., CSₚ).
